# EUROPÄISCHE PATENTSCHRIFT

(11) **EP 1 960 643 B1**
(45) Veröffentlichungstag und Bekanntmachung des Hinweises auf die Patenterteilung: **02.06.2010**
(21) Anmeldenummer: 06819891.0
(22) Anmeldetag: 01.12.2006
(51) Int. Cl.: F01N 11/00

(54) **VERFAHREN ZUR DIAGNOSE EINES IN EINEM ABGASBEREICH EINER BRENNKRAFTMASCHINE ANGEORDNETEN KATALYSATORS UND VORRICHTUNG ZUR DURCHFÜHRUNG DES VERFAHRENS**
METHOD FOR THE DIAGNOSIS OF A CATALYST ARRANGED IN THE EXHAUST GAS REGION OF AN INTERNAL COMBUSTION ENGINE, AND DEVICE FOR CARRYING OUT THE METHOD
PROCEDE POUR EFFECTUER UN DIAGNOSTIC SUR UN CATALYSEUR MIS EN PLACE DANS LA ZONE D'ECHAPPEMENT D'UN MOTEUR A COMBUSTION INTERNE, ET DISPOSITIF POUR METTRE EN OEUVRE LE PROCEDE

(30) Priorität: 05.12.2005 DE 102005057957; 08.12.2005 DE 102005058524; 23.12.2005 DE 102005062116
(43) Veröffentlichungstag der Anmeldung: 27.08.2008
(73) Patentinhaber: ROBERT BOSCH GMBH, 70442 Stuttgart (DE)
(72) Erfinder: SCHNEIDER, Erich, 74366 Kirchheim (DE); CLEMENT, Albrecht, 71665 Vaihingen (DE); WEHMEIER, Kersten, 71638 Ludwigsburg (DE); WOLL, Christoph, 70839 Gerlingen (DE); HOTZEL, Richard, 70469 Stuttgart (DE); LABBE, Magnus, 71696 Moeglingen (DE)
(86) Internationale Anmeldenummer: PCT/EP2006/069191
(87) Internationale Veröffentlichungsnummer: WO 2007/065854

(56) Entgegenhaltungen:
- DE-A1- 4 128 823
- DE-A1- 19 801 626
- US-A- 5 165 230

## Beschreibung

### Stand der Technik

Die Erfindung geht aus von einem Verfahren zur Diagnose (On-Board-Diagnose) eines in einem Abgasbereich einer Brennkraftmaschine angeordneten Katalysators und von einer Vorrichtung zur Durchführung des Verfahrens nach der Gattung der unabhängigen Ansprüche.

Die Erfindung betrifft weiterhin ein Steuergerätprogramm sowie ein Steuergerät-Programmprodukt.

Das Sauerstoff-Speichervermögen eines Katalysators wird dazu ausgenutzt, in Magerphasen des einer Brennkraftmaschine zugeführten Luft-Kraftstoff-Gemischs Sauerstoff aufzunehmen und in Fettphasen wieder abzugeben. Hierdurch wird erreicht, dass unerwünschte Abgaskomponenten effizient konvertiert werden können. Mit zunehmender Alterung des Katalysators nimmt das Sauerstoff-Speichervermögen ab. Hierdurch kann in den Fettphasen nicht mehr genügend Sauerstoff für Oxidationsreaktionen zur Verfügung gestellt werden.

Ein auf der Bewertung der Sauerstoff-Speicherfähigkeit eines Katalysators beruhendes Katalysator-Diagnoseverfahren ist in der Patentanmeldung DE 24 44 334 beschrieben. Der Brennkraftmaschine werden abwechselnd ein fettes Luft-Kraftstoff-Gemisch mit einem Lambda von 0,95 und ein mageres Luft-KraftstoffGemisch mit einem Lambda von 1,05 zugeführt. Ein stromabwärts nach dem Katalysator angeordneter Sprung-Lambdasensor detektiert in einer Fettphase das Auftreten von Sauerstoffmangel und in einer Magerphase das Auftreten von Sauerstoffüberschuss. Das Signal des Stromabwärts-Sprung-Lambdasensors stoppt einen Zeitgeber, der von einem Signal gestartet wird, das ein stromaufwärts vor dem Katalysator angeordneter Sprung-Lambdasensor bereitstellt. Die Einstellung der Luftzahl Lambda in den Fett- und Magerphasen ist trotz der eingesetzten Sprung-Lambdasensoren, die eine genaue Erfassung nur eines um den Lambdawert 1 begrenzten Lambdabereichs ermöglichen, im Rahmen einer Lambdaregelung vorgesehen. Die vorgegebenen Abweichungen der Luftzahl Lambda vom Wert 1 für eine stöchiometrische Verbrennung sind derart festgelegt, dass die Kennlinien der beiden Sprung-Lambdasensoren gerade noch ausreichen, die Abweichungen vom Wert 1 wenigstens näherungsweise quantitativ zu erfassen. Voraussetzung für die Diagnose ist ein wenigstens näherungsweise konstanter Gasdurchsatz. Dieser wird dadurch sichergestellt, dass die Diagnose nur freigegeben wird, wenn ein bestimmtes, von einem Luftmengensensor und/oder Drosselklappen-Positionsgeber bereitgestelltes Signal vorliegt.

Das im DE-Patent 41 12 480 beschriebene Katalysator-Diagnoseverfahren, das ebenfalls auf der Bewertung der Sauerstoff-Speicherfähigkeit des Katalysators beruht, geht dadurch einen Schritt weiter, dass die dem Katalysator im Rahmen der Fett- und Magerphasen zugeführte Sauerstoffmenge quantitativ anhand der gemessenen Luftströmung und der stromaufwärts vor dem Katalysator mit einem Breitband-Lambdasensor gemessenen Luftzahl Lambda mit einer Integration berechnet wird.

Sofern stromaufwärts vor dem Katalysator ein Sprung-Lambdasensor (Zweipunkt-Lambdasensor) eingesetzt ist, kann der Sauerstoffgehalt des eingetragenen Abgases quantitativ nicht ohne weiteres ermittelt werden. Dies gilt sowohl für das fette Gemisch als auch für das magere Gemisch. Ein Ansatz für eine Ermittlung des Sauerstoffgehalts im Abgas geht von einer korrekten Vorsteuerung des der Brennkraftmaschine zugeführten Luft-Kraftstoff-Betriebsgemischs aus. Ein Vorsteuerfehler beeinflusst jedoch das Diagnoseergebnis erheblich.

Der Erfindung liegt die Aufgabe zugrunde, ein Verfahren zur Diagnose eines in einem Abgasbereich einer Brennkraftmaschine angeordneten Katalysators und eine Vorrichtung zur Durchführung des Verfahrens anzugeben, die eine hohe Genauigkeit bei der Ermittlung der Sauerstoff-Speicherfähigkeit des Katalysators erzielen.

### Offenbarung der Erfindung

Die Aufgabe wird durch die in den unabhängigen Ansprüchen angegebenen Merkmale jeweils gelöst.

Die erfindungsgemäße Vorgehensweise erhöht die Genauigkeit und die Zuverlässigkeit der Katalysatordiagnose dadurch, dass die Sauerstoff-Speicherfähigkeit des Katalysators, welche der Diagnose zugrunde liegen soll, mit hoher Zuverlässigkeit ermittelt werden kann.

Bei der Vorgabe eines Diagnosegemisch-Lambda-Soll-Signalverlaufs mit fetten und-mageren Lambdawerten ist vorgesehen, dass bei einem Wechsel zwischen fetten und mageren Lambdawerten eine rampenförmige Änderung des Diagnosegemisch-Lambda-Soll-Signalverlaufs vorgegeben wird, die bei einem fetten Start-Lambdawert beginnt, den Lambdawert = 1 durchschreitet und bei einem mageren End-Lambdawert endet. Die Vorgehensweise kann selbstverständlich gleichermaßen für eine Änderung von einem mageren auf einen fetten Lambdawert des Diagnosegemisch-Lambda-Soll-Signalverlaufs vorgesehen sein.

Die Vorgabe einer rampenförmigen Änderung des Lambdawerts des Diagnosegemisch-Lambda-Soll-Signalverlaufs im Bereich um Lambda = 1 ist gleichbedeutend mit einem flachen, stets steigenden beziehungsweise stets fallenden Verlauf im Bereich um Lambda = 1.

Mit der Vorgabe einer rampenförmigen Änderung anstelle einer sprungförmigen Änderung wird erreicht, dass ein Vorsteuerfehler des gesteuerten Diagnosegemisch-Lambda-Soll-Signalverlaufs beim Wechsel zwischen Fett- und Magerphasen mit einer höheren Trennschärfe als bei einer sprungförmigen Umschaltung detektiert werden kann. Der sonst auftretende Nachteil, dass eine kleine Abweichung bereits zu vergleichsweise großen Fehlern bei der Berechnung der Sauerstoff-Speicherfähigkeit des Katalysators führen kann, wird damit deutlich vermindert.

Eine detektierte Abweichung kann beispielsweise dazu herangezogen werden, die Lambdawerte des Diagnosegemisch-Lambda-Soll-Signalverlaufs anzupassen, so dass ein Vorsteuerfehler ausgeglichen werden kann und die berechnete Sauerstoff-Speicherfähigkeit als Maß für die Güte des Katalysators genauer wird.

Vorteilhafte Weiterbildungen und Ausgestaltungen der erfindungsgemäßen Vorgehensweise ergeben sich aus abhängigen Ansprüchen.

Eine Ausgestaltung sieht eine Vorgabe einer linearen rampenförmigen Änderung vor, die sich besonders einfach programmieren lässt.

Eine andere Ausgestaltung sieht vor, dass die rampenförmige Änderung mit einem ersten Lambdasprung erreicht und/oder mit einem zweiten-Lambdasprung verlassen wird. Die wenigstens eine sprungförmige Änderung ermöglicht es, die Periodendauer der wenigstens einen Schwingung des Diagnosegemisch-Lambda-Soll-Signalverlaufs möglichst kurz zu erhalten.

Eine Weiterbildung dieser Ausgestaltung sieht vor, dass der erste Lambdasprung von einem fetten/mageren Maximal-Lambdawert ausgeht und/oder dass der zweite Lambdasprung vom mageren/fetten Maximal-Lambdawert ausgeht. Dadurch kann die kürzestmögliche Periodendauer der wenigstens einen Schwingung des Diagnosegemisch-Lambda-Soll-Signalverlaufs erhalten werden.

Eine Ausgestaltung sieht vor, dass der Lambda-1-Durchgang des Diagnosegemisch-Lambda-Ist-Signalverlaufs anhand eines gemessenen Stromaufwärts-Lambdasignals mit einer Zweipunkt-Charakteristik beziehungsweise Sprung-Charakteristik erfasst wird. Ein Lambdasensor, der ein solches Sensorsignal mit Zweipunkt-Charakteristik beziehungsweise Sprung-Charakteristik zur Verfügung stellt, ist besonders preiswert erhältlich. Dadurch ergeben sich erhebliche Einsparungen beim Serieneinsatz der erfindungsgemäßen Katalysatordiagnose.

Eine Ausgestaltung sieht die Ermittlung einer Abweichung zwischen dem Diagnosegemisch-Lambda-Ist-Signalverlauf und einem berechneten Diagnosegemisch-Lambda-Signalverlauf anhand der Zeitdifferenz vor, die zwischen dem Lambda-1-Durchgang des Diagnosegemisch-Lambda-Ist-Signalverlaufs und einem Lambda-1-Durchgang des berechneten Diagnosegemisch-Lambda-Signalverlaufs auftritt. Die ermittelte Zeitdifferenz wird zur Korrektur des vorgegebenen Diagnosegemisch-Lambda-Soll-Signalverlaufs oder zum Abbruch der Diagnose herangezogen.

Eine weitere Erhöhung der Zuverlässigkeit beziehungsweise der Genauigkeit der Diagnose ergibt sich durch eine Mittelwertbildung bei der Ermittlung des Lambda-1-Durchgangs des Diagnosegemisch-Lambda-Ist-Signalverlaufs.

Die erfindungsgemäße-Vorrichtung-zur Durchführung des Verfahrens betrifft zunächst eine Steuereinrichtung, welche zur Durchführung des Verfahrens speziell hergerichtet ist.

Die Steuereinrichtung enthält vorzugsweise wenigstens einen elektrischen Speicher, in welchem die Verfahrensschritte als Computerprogramm abgelegt sind.

Das erfindungsgemäße Computerprogramm sieht vor, dass alle Schritte des erfindungsgemäßen Verfahrens ausgeführt werden, wenn es auf einem Computer bzw. in der Steuereinrichtung abläuft.

Das Computerprogrammprodukt mit einem auf einem maschinenlesbaren Träger gespeicherten Programmcode führt das erfindungsgemäße Verfahren aus, wenn das Programm auf einem Computer bzw. in der Steuereinrichtung ausgeführt wird.

Weitere vorteilhafte Weiterbildungen und Ausgestaltungen der erfindungsgemäßen Vorgehensweise ergeben sich aus weiteren abhängigen Ansprüchen. Ausführungsbeispiele der Erfindung sind in der Zeichnung dargestellt und in der nachfolgenden Beschreibung näher erläutert.

Es zeigen:
- Figur 1: ein technisches Umfeld, in welchem ein erfindungsgemäßes Ver- fahren abläuft und
- Figur 2: Lambda-Signalverläufe in Abhängigkeit von der Zeit.

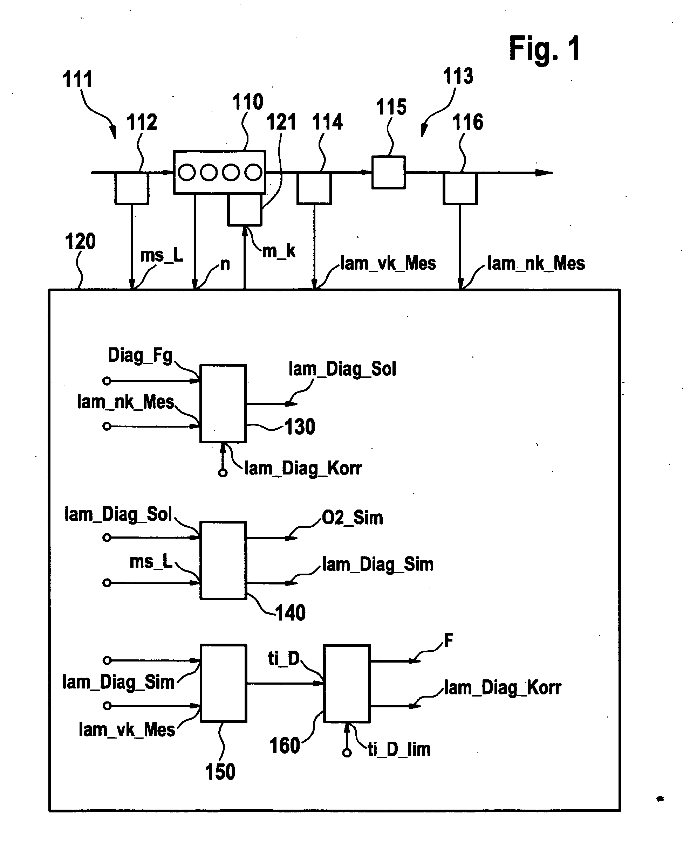

Figur 1 zeigt eine Brennkraftmaschine 110, in deren Ansaugbereich 111 eine Lufterfassung 112 und in deren Abgasbereich 113 ein Stromaufwärts-Lambdasensor 114, der stromaufwärts vor einem Katalysator 115 angeordnet ist, und ein Stromabwärts-Abgassensor 116, der stromabwärts nach dem Katalysator 115 angeordnet ist, vorgesehen sind.

Die Lufterfassung 112 stellt einem Steuergerät 120 ein Luftsignal ms_L, die Brennkraftmaschine 110 eine Drehzahl n, der Stromaufwärts-Lambdasensor 114 ein gemessenes Stromaufwärts-Lambdasignal lam_vK_Mes und der Stromabwärts-Lambdasensor 116 ein gemessenes Stromabwärts-Lambdasignal lam_nK_Mes zur Verfügung. Das Steuergerät 120 stellt einer Kraftstoff-Zumessung 121 ein Kraftstoffsignal m_K zur Verfügung.

Die beiden Lambdasensoren 114, 116 sind vorzugsweise als preiswerte Sprung-Lambdasensoren realisiert, sodass die gemessenen Lambdasignale lam_vK_Mes, lam_nK_Mes Sprung-Charakteristik aufweisen. Die Lambdasensoren 114, 116 ermöglichen das Betreiben der Brennkraftmaschine 110 mit einem Luft-KraftstoffGemisch, das auf einen Lambdawert im Bereich von Lambda = 1, beispielsweise im Bereich von Lambda = 0,995 und 1,005 mit hoher Genauigkeit geregelt werden kann.

Vorgesehen ist eine Diagnose des Katalysators 115, die auf einer Ermittlung zumindest eines Maßes für dessen Sauerstoff-Speicherfähigkeit beruht, die als Maß für die Alterung des Katalysators 115 herangezogen werden kann. Eine geringe Sauerstoff-Speicherfähigkeit bedeutet hierbei ein gealterter Katalysator 115.

Vorgesehen sein kann, dass die Diagnose nur durchgeführt wird, wenn wenigstens eine Betriebsgröße der Brennkraftmaschine 110 eine vorgegebene Bedingung erfüllt. Als Betriebsgröße kann beispielsweise die Drehzahl n oder eine Last der Brennkraftmaschine 110 herangezogen werden. Neben der Überprüfung, ob die wenigstens eine Betriebsgröße n einen Schwellenwert über- oder unterschreitet beziehungsweise in einem Bereich liegt, ist zweckmäßigerweise eine Überprüfung vorgesehen, ob der Differenzialquotient, der durch einen Differenzenquotienten angenähert werden kann, unterhalb eines vorgegebenen Schwellenwerts liegt. Dadurch kann sichergestellt werden, dass die Brennkraftmaschine in einem zumindest näherungsweise stationären Betriebszustands betrieben wird. Die Diagnose wird freigegeben und durchgeführt, wenn ein Diagnose-Freigabesignal Diag_Fg vorliegt, das einer Kenngrößen-Festlegung-130 zur Verfügung gestellt wird..

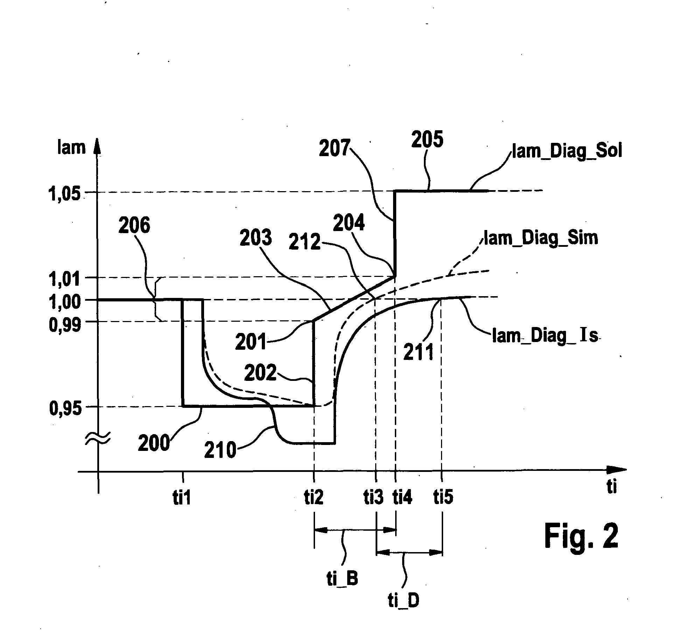

Vor einem in Figur 2 gezeigten ersten Zeitpunkt ti1 wird die Brennkraftmaschine 110 mit einem Luft-Kraftstoff-Betriebsgemisch betrieben, dessen Lambdawert auf beispielsweise Lambda = 1 wenigstens näherungsweise festgelegt ist.

Zum ersten Zeitpunkt ti1 tritt das Diagnose-Freigabesignal Diag_Fg auf. Die Kenngrößen-Festlegung 130 veranlasst zum ersten Zeitpunkt ti1 das Betreiben der Brennkraftmaschine 110 mit einem Diagnosegemisch, welches auf einen fetten Maximal-Lambdawert 200 von beispielsweise Lambda = 0,95 festgelegt wird. Die Änderung auf den fetten Maximal-Lambdawert 200 erfolgt vorzugsweise sprungförmig. Der gesamte zeitliche Verlauf des Lambdas des Diagnosegemischs ist in Figur 2 als Diagnosegemisch-Lambda-Soll-Signalverlauf lam_Diag_Sol eingetragen.

Zu einem zweiten Zeitpunkt ti2 erfolgt die Umschaltung vom fetten Maximal-Lambdawert 200 auf einen weniger fetten Start-Lambdawert 201 von beispielsweise 0,99, wobei die Änderung vorzugsweise mit einem ersten Lambdasprung 202 sprungförmig erfolgt.

Der zweite Zeitpunkt ti2 wird durch das vom Stromabwärts-Lambdasensor 116 bereitgestellte gemessene Stromabwärts-Lambdasignal lam_nK_Mes bestimmt, das der Kenngrößen-Festlegung 130 zur Verfügung steht. Die Umschaltung wird vorgenommen, wenn das gemessene, nicht dargestellte Stromabwärts-Lambdasignal lam_nK_Mes wenigstens näherungsweise einen Lambda-1-Durchgang aufweist, der den Durchbruch des Sauerstoffmangels stromabwärts nach dem Katalysator 115 signalisiert.

Nach dem zweiten Zeitpunkt ti2 ist eine rampenförmige Änderung 203 des Diagnosegemisch-Lambda-Soll-Signalverlaufs lam_Diag_Sol vorgesehen. Die rampenförmige Änderung 203 erfolgt hierbei ausgehend vom weniger fetten Start-Lambdawert 201, durchschreitet Lambda = 1 und endet zu einem vierten Zeitpunkt ti4 mit einem weniger mageren End-Lambdawert 204 gegenüber einem mageren Maximal-Lambdawert 205, der nach dem vierten Zeitpunkt-ti4 vorgegeben wird. Die rampenförmige Änderung 203 wird mit einer vorgegebenen Steigung im Zeitbereich ti_B vorgegeben, der zwischen dem zweiten und vierten Zeitpunkt ti2, ti4 liegt. Die Steigung hängt einerseits vom festlegbaren Zeitbereich ti_B und andererseits von der Differenz zwischen dem End-Lambdawert 204 und dem Start-Lambdawert 201 ab.

Die rampenförmige Änderung 203 ist demnach in einem Lambdabereich 206 vorgesehen, der Lambda = 1 einschließt.

Die Änderung des Lambdawerts des Diagnosegemisch-Lambda-Soll-Signalverlaufs lam_Diag_Sol vom weniger mageren End-Lambdawert 204 auf den mageren Maximal-Lambdawert auf den mageren Lambdawert 205 zum vierten Zeitpunkt ti4 erfolgt vorzugsweise sprungförmig mit einem zweiten Lambdasprung 207. Nach dem vierten Zeitpunkt ti4 wird der magere Maximal-Lambdawert 205 vorgegeben.

Ein weiterer Wechsel vom mageren Lambdabereich zum fetten Lambdabereich, der nicht dargestellt ist, wird wieder durch das vom Stromabwärts-Lambdasensor 116 bereitgestellte gemessene Stromabwärts-Lambdasignal lam_nK_Mes bestimmt. Die Umschaltung wird vorgenommen, wenn das gemessene Stromabwärts-Lambdasignal lam_nK_Mes wieder wenigstens näherungsweise einen Lambda-1-Durchgang aufweist, der den Durchbruch des Sauerstoffüberschusses stromabwärts nach dem Katalysator 115 signalisiert.

Die Sauerstoff-Speicherfähigkeit O2_Sim des Katalysators 115 kann in einer Kenngrößen-Berechnung 140 anhand eines Integrals ermittelt werden, welcher das Luftsignal ms_L und der Diagnosegemisch-Lambda-Soll-Signalverlauf lam_Diag_Sol zur Verfügung stehen. Die Integration wird beispielsweise über diejenige Zeitdauer durchgeführt, während welcher der Diagnosegemisch-Lambda-Soll-Signalverlauf lam_Diag_Sol den mageren Maximal-Lambdawert 205 von beispielsweise 1,05 aufweist. In diesem Fall liefert das Integral die im Katalysator 115 eingespeicherte Sauerstoffmenge.

Vorzugsweise erstreckt sich die Katalysatordiagnose über mehrere Perioden des Diagnosegemisch-Lambda-Soll-Signalverlaufs lam_Diag_Sol, um eine Mittelwertbildung der Berechnung der Sauerstoff-Speicherfähigkeit 02_Sim über mehrere Perioden durchführen zu können.

Zusätzlich oder alternativ kann die im Katalysator 115 gespeicherte Sauerstoffmenge auch anhand einer Integration über diejenige Zeitdauer erhalten werden, während welcher der Diagnosegemisch-Lambda-Soll-Signalverlauf lam_Diag_Sol den fetten Maximal-Lambdawert 200 von beispielsweise 0,95 aufweist.

Bei der Ermittlung des Diagnoseergebnisses wird vorausgesetzt, dass das Lambda des tatsächlich im Abgasbereich 113 auftretenden Diagnosegemisch-Lambda-Ist-Signalverlaufs lam_Diag_Is mit dem vorgegebenen Diagnosegemisch-Lambda-Soll-Signalverlauf lam_Diag_Sol - abgesehen von bekannten Signalverzögerungen durch Laufzeiten und abgesehen von Einschwingvorgängen - weitgehend übereinstimmt. Eventuell auftretende Abweichungen wirken sich unmittelbar auf das Diagnoseergebnis aus.

Im gezeigten Ausführungsbeispiel wird davon ausgegangen, dass zwischen dem ersten und zweiten Zeitpunkt ti1, ti2 eine Abweichung 210 aufgetreten ist. Abweichungen 210 können beispielsweise durch eine Streuung oder Drift von nicht näher gezeigten, in der Kraftstoff-Zumessung 121 enthaltenen Kraftstoff-Einspritzventilen oder durch Fehler in der Lufterfassung 112 auftreten, die im Rahmen einer Adaption eines nicht näher gezeigten Lambdareglers nicht vollständig kompensiert sind.

Vorgesehen ist eine Zeitdifferenz-Ermittlung 150, welche eine Zeitdifferenz ti_D ermittelt, die zwischen einem Lambda-1-Durchgang 211 des Diagnosegemisch-Lambda-Ist-Signalverlaufs lam_Diag_Is und dem Lambda-1-Durchgang 212 eines von der Kenngrößen-Berechnung 140 berechneten Diagnosegemisch-Lambda-Signalverlaufs lam_Diag_Sim auftritt.

Der Lambda-1-Durchgang 211 des Diagnosegemisch-Lambda-Ist-Signalverlaufs lam_Diag_Is tritt zu einem dritten Zeitpunkt ti3 und der Lambda-1-Durchgang 212 des Diagnosegemisch-Lambda-Soll-Signalverlaufs lam_Diag_Sol tritt zu einem fünften Zeitpunkt ti5 auf.

Die zwischen dem dritten und fünften Zeitpunkt ti3, ti5 liegende Zeitdifferenz ti_D entspricht einem Maß für den Vorsteuerfehler. Eine geringe Zeitdifferenz ti_D entspricht einer guten Übereinstimmung zwischen dem Diagnosegemisch-Lambda-Ist-Signalverlauf lam_Diag_Is und dem berechneten Diagnosegemisch-Lambda-Signalverlauf lam_Diag_Sim. In diesem Fall kann die von der Kenngrößen-Berechnung 140 ermittelte Sauerstoff-Speicherfähigkeit O2_Sim als zuverlässig gelten und der Diagnose zugrunde gelegt werden. Eine größere Zeitdifferenz ti_D in positiver oder negativer Richtung deutet auf eine höhere Abweichung 210 hin, sodass die ermittelte Sauerstoff-Speicherfähigkeit O2_Sim voraussichtlich fehlerhaft ist und das Diagnoseergebnis entsprechend unzuverlässig ausfällt.

Mit der Vorgabe der rampenförmige Änderung 203 im Zeitbereich ti_B anstelle einer sprungförmigen Änderung wird erreicht, dass ein Vorsteuerfehler bei der Festlegung des gesteuerten Diagnosegemisch-Lambda-Soll-Signalverlaufs lam_Diag_Sol bei einem zeitlich in die Länge gezogenen Wechsel zwischen Fett-und Magerphasen mit einer höheren Trennschärfe als bei einer sprunghaften Umschaltung detektiert werden kann. Ohne die erfindungsgemäß vorgesehene Maßnahme einer rampenförmigen Änderung 203 würden der dritte und fünfte Zeitpunkt ti3, ti5 wesentlich näher beieinander liegen, so dass die auftretende Zeitdifferenz ti _D stets erheblich kürzer wäre. Die rampenförmige Änderung 203 wirkt demnach gewissermaßen wie eine Verstärkung der Zeitdifferenz ti _D, die dadurch mit einer höheren Genauigkeit erfasst werden kann.

Die ermittelte Zeitdifferenz ti_D kann in einer Zeitdifferenz-Bewertung 160 dazu herangezogen werden, einen Diagnoselambda-Korrekturwert lam_Diag_Korr zu ermitteln, welcher der Kenngrößen-Festlegung 130 zur Verfügung gestellt wird, die in Abhängigkeit vom Diagnoselambda-Korrekturwert lam_Diag_Korr die mageren und/oder fetten. Lambdawerten 200, 205 des Diagnosegemisch-Lambda-Soll-Signalverlaufs lam_Diag_Sol durch Anheben beziehungsweise Absenken der Lambdawerten 200, 205 mit dem Ziel zu beeinflussen, in den folgenden Perioden des Diagnosegemisch-Lambda-Soll-Signalverlaufs lam_Diag_Sol eine bessere Übereinstimmung zwischen dem gesteuerten Diagnosegemisch-Lambda-Soll-Signalverlauf lam_Diag_Sol und dem sich einstellenden Diagnosegemisch-Lambda-Ist-Signalverlauf zu erhalten. Zur Beeinflussung der Lambdawerten 200, 205 des Diagnosegemisch-Lambda-Soll-Signalverlaufs lam_Diag_Sol kann in das Kraftstoffsignal m_K oder in die Luftzuführung der Brennkraftmaschine 110 eingegriffen werden.

Die Vorgehensweise kann selbstverständlich gleichermaßen für eine Änderung von einem mageren Maximal-Lambdawert 205 auf einen fetten Maximal-Lambdawert 200 des Diagnosegemisch-Lambda-Soll-Signalverlaufs lam_Diag_Sol vorgesehen sein. Die rampenförmige Änderung 203 würde in diesem Fall beim weniger mageren Lambdawert 204, welcher nunmehr zum Start-Lambdawert wird, zum zweiten Zeitpunkt ti2 starten, den Lambdawert = 1 durchschreiten und zum vierten Zeitpunkt ti4 mit dem weniger fetten Lambdawert 201, welcher nunmehr zum End-Lambdawert wird, enden.

Die ermittelte Zeitdifferenz ti_D kann in der Zeitdifferenz-Bewertung 160 weiterhin dazu herangezogen werden, ein Fehlersignal F zu ermitteln. Hierzu wird die Zeitdifferenz ti_D mit einem vorgegebenen Zeitdifferenz-Schwellenwert ti_D_Lim verglichen. Wenn die Zeitdifferenz ti_D den Zeitdifferenz-Schwellenwert ti_D_Lim überschreitet, wird das Fehlersignal F ausgegeben, mit dem beispielsweise signalisiert werden kann, dass das Diagnoseergebnis voraussichtlich unzuverlässig ist oder mit welchem eine laufende Diagnose abgebrochen werden kann. Weiterhin kann das Fehlersignal F festlegen, dass ein bereits ermitteltes Diagnoseergebnis verworfen werden soll.

Zur weiteren Erhöhung der Zuverlässigkeit der Katalysatordiagnose kann eine Mittelwertbildung bei der Ermittlung des Lambda-1-Durchgangs 211 des Diagnosegemisch-Lambda-Ist-Signalverlaufs lam_Diag_Is vorgesehen sein. Die Mittelwertbildung sorgt bei einem von Rauschen überlagerten Diagnosegemisch-Lambda-Ist-Signalverlauf lam_Diag_Is dafür, dass bei einem Wechsel vom fetten zum mageren Diagnosegemisch nicht bereits ein erster, durch Rauschen bedingter Lambda-1-Durchgang 211 als tatsächlicher Lambda-1-Durchgang 211 gewertet wird.

Voraussetzung für die Mittelwertbildung ist die Festlegung eines Abtastintervalls für den Diagnosegemisch-Lambda-Ist-Signalverlauf lam_Diag_Is, das - bezogen auf den Figur 2 zugrunde liegenden Zeitmaßstab - erheblich kürzer ist, sodass um beispielsweise dem vierten Zeitbereich ti4 eine Vielzahl von Abtastwerten des Diagnosegemisch-Lambda-Ist-Signalverlaufs lam_Diag_Is vorliegen, damit eine Mittelwertbildung überhaupt möglich ist. Die Mittelwertbildung kann beispielsweise derart erfolgen, dass zunächst ein Verhältnis der Zeitintervalle gebildet wird, in welchen fettes und in welchen mageres Diagnosegemisch vorgelegen hat, und dass anschließend ein Vergleich mit einem Schwellenwert - beispielsweise 50 Prozent - vorgesehen ist.

## Patentansprüche

1. Verfahren zur Diagnose eines in einem Abgasbereich (113) einer Brennkraftmaschine (110) angeordneten Katalysators (115), das auf einer Ermittlung der Sauerstoff-Speicherfähigkeit (O2_Sim) des Katalysators (115) beruht, die anhand eines in Abhängigkeit von einem gemessenen Stromabwärts-Lambdasignal (lam_nK_Mes) vorgegebenen Diagnosegemisch-Lambda-Soll-Signalverlauf (lam_Diag_Sol) mit fettem und mageren Lambdawerten ermittelt wird, **dadurch gekennzeichnet, dass** bei einem Wechsel zwischen fetten/mageren und mageren/fetten Lambdawerten eine rampenförmige Änderung (203) des Diagnosegemisch-Lambda-Soll-Signalverlaufs (lam_Diag_Sol) vorgegeben wird, die bei einem fetten/mageren Start-Lambdawert (201, 204) beginnt, den Lambdawert = 1 durchschreitet und bei einem mageren/fetten End-Lambdawert (201, 204) endet.

2. Verfahren nach Anspruch 1, **dadurch gekennzeichnet, dass** eine lineare rampenförmige Änderung (203) vorgegeben wird.

3. Verfahren nach Anspruch 1, **dadurch gekennzeichnet, dass** die rampenförmige Änderung (203) mit einem ersten Lambdasprung (202) erreicht und/oder mit einem zweiten Lambdasprung (207) verlassen wird.

4. Verfahren nach Anspruch 3, **dadurch gekennzeichnet, dass** der erste Lambdasprung (202) von einem fetten/mageren Maximal-Lambdawert (200, 205) ausgeht und/oder dass der zweite Lambdasprung (207) von mageren /fetten Maximal-Lambdawert (200, 205) ausgeht.

5. Verfahren nach Anspruch 1, **dadurch gekennzeichnet, dass** eine Abweichung (210) zwischen einem Diagnosegemisch-Lambda-Ist-Signalverlauf (lam_Diag_Is) und einem berechneten Diagnosegemisch-Lambda-Signalverlauf (lam_Diag_Sim) anhand derjenigen Zeitdifferenz (ti _D) ermittelt wird, die zwischen einem Lambda-1-Durchgang (211) des Diagnosegemisch-Lambda-Ist-Signalverlaufs (lam_Diag_Is) und einem Lambda-1-Durchgang (212) des berechneten Diagnosegemisch-Lambda-Signalverlaufs (lam_Diag_Sim) auftritt, und dass die Zeitdifferenz (ti _D) zur.Korrektur des vorgegebenen Diagnosegemisch-Lambda-Soll-Signalverlaufs (lam_Diag_Sol) mit einem Diagnoselambda-Korrekturwert (lam_Diag_Korr) und/oder zum Abbruch der Diagnose herangezogen wird.

6. Verfahren nach Anspruch 5, **dadurch gekennzeichnet, dass** eine Mittelwertbildung bei der Ermittlung des Lambda-1-Durchgangs (211) des Diagnosegemisch-Lambda-Ist-Signalverlaufs (lam_Diag_Sim) vorgesehen wird.

7. Verfahren nach Anspruch 5, **dadurch gekennzeichnet, dass** der Lambda-1-Durchgang (211) des Diagnosegemisch-Lambda-Ist-Signalverlaufs (lam_Diag_Is) anhand eines gemessenen stromaufwärts-Lambdasignals (lam_vK_Mes) mit Sprung-Charakteristik erfasst wird.

8. Vorrichtung zur Diagnose eines in einem Abgasbereich (113) einer Brennkraftmaschine (110) angeordneten Katalysators (115), **dadurch gekennzeichnet, dass** zur Durchführung des Verfahrens nach einem der vorhergehenden Ansprüche ein speziell hergerichtetes Steuergerät (120) vorgesehen ist.

9. Vorrichtung nach Anspruch 8, **dadurch gekennzeichnet, dass** stromaufwärts vor dem Katalysator (115) ein Sprung-Lambdasensor (114) angeordnet ist.

10. Steuergerätprogramm, das alle Schritte eines Verfahrens nach einem der Ansprüche 1 bis 7 ausführt, wenn es in einem Steuergerät (120) abläuft.

11. Steuergerät-Programmprodukt mit einem auf einem maschinenlesbaren Träger gespeicherten Programmcode zur Durchführung des Verfahrens nach einem der Ansprüche 1 bis 7, wenn das Programm in einem Steuergerät (120) ausgeführt wird.

## Claims

1. Method for the diagnosis of a catalytic converter (115) which is arranged in the exhaust region (113) of an internal combustion engine (110) and which is based on determination of the oxygen storage capacity (O2_Sim) of the catalytic converter (115), which storage capacity (O2_Sim) is determined on the basis of a diagnostic mixture lambda setpoint signal profile (lam_Diag_Setp) which is predefined as a function of a measured downstream lambda signal (lam_nK_Mes) and has rich and lean lambda values, **characterized in that** when there is a changeover between rich/lean and lean/rich lambda values a ramp-shaped change (203) of the diagnostic mixture lambda setpoint signal profile (lam_Diag_Setp) is predefined, which change (203) starts at a rich/lean starting lambda value (201, 204), passes through the lambda value = 1 and ends at a lean/rich final lambda value (201, 204).

2. Method according to Claim 1, **characterized in that** the linear ramp-shaped change (203) is predefined.

3. Method according to Claim 1, **characterized in that** the ramp-shaped change (203) is reached with a first lambda jump (202) and/or exited with a second lambda jump (207).

4. Method according to Claim 3, **characterized in that** the first lambda jump (202) starts from a rich/lean maximum lambda value (200, 205), and/or **in that** the second lambda jump (207) starts from a lean/rich maximum lambda value (200, 205).

5. Method according to Claim 1, **characterized in that** a deviation (210) between a diagnostic mixture lambda actual signal profile (lam_Diag_Is) and a calculated diagnostic mixture lambda signal profile (lam_Diag_Sim) is determined on the basis of that time difference (ti_D) which occurs between a lambda-1-crossover (211) of the diagnostic mixture lambda actual signal profile (lam_Diag_Is) and a lambda-1-crossover (212) of the calculated diagnostic mixture lambda signal profile (lam_Diag_Sim), and **in that** the time difference (ti_D) is used to correct the predefined diagnostic mixture lambda setpoint signal profile (lam_Diag_Setp) with a diagnostic lambda correction value (lam_Diag_Corr) and/or to abort the diagnosis.

6. Method according to Claim 5, **characterized in that** a formation of mean values is provided during the determination of the lambda-1-crossover (211) of the diagnostic mixture lambda actual signal profile (lam_Diag_Sim).

7. Method according to Claim 5, **characterized in that** the lambda-1-crossover (211) of the diagnostic mixture lambda actual signal profile (lam_Diag_Is) is sensed on the basis of a measured upstream lambda signal (lam_vK_Mes) with a jump characteristic.

8. Device for diagnosing a catalytic converter (115) which is arranged in an exhaust region (113) of an internal combustion engine (110), **characterized in that** a specially configured control device (110) is provided for carrying out the method according to one of the preceding claims.

9. Device according to Claim 8, **characterized in that** a jump lambda sensor (114) is arranged upstream of the catalytic converter (115).

10. Control device program which executes all the steps of a method according to one of Claims 1 to 7 when it runs in a control device (120).

11. Control device program product having a programme code which is stored on a machine-readable carrier and has the purpose of carrying out the method according to one of Claims 1 to 7 when the programme is executed in a control device (120).

## Revendications

1. Procédé pour effectuer un diagnostic sur un catalyseur (115) placé dans une zone d'échappement (113) d'un moteur à combustion interne (110), qui est basé sur la détermination de la capacité d'accumulation d'oxygène (O2_Sim) du catalyseur (115), qui est déterminée à l'aide d'une courbe de signal de consigne de lambda de mélange de diagnostic (lam_Diag_Sol) prédéterminée en fonction d'un signal de lambda en aval mesuré (lam_nK_Mes), avec des valeurs de lambda riches et pauvres, **caractérisé en ce que**, lors d'un changement entre des valeurs de lambda riche/pauvre et pauvre/riche, on prédétermine une variation en forme de rampe (203) de la courbe de signal de consigne de lambda de mélange de diagnostic (lam_Diag_SoI), qui commence pour une valeur de lambda initiale riche/pauvre (201, 204), transverse la valeur de lambda = 1 et se termine pour une valeur de lambda finale pauvre/riche (201, 204).

2. Procédé selon la revendication 1, **caractérisé en ce que** l'on prédétermine une variation en forme de rampe linéaire (203).

3. Procédé selon la revendication 1, **caractérisé en ce que** l'on atteint la variation en forme de rampe (203) par un premier saut de lambda (202) et/ou on la quitte par un second saut de lambda (207).

4. Procédé selon la revendication 3, **caractérisé en ce que** le premier saut de lambda (202) part d'une valeur de lambda maximale riche/pauvre (200, 205) et/ou en ce que le second saut de lambda (207) part d'une valeur de lambda maximale pauvre/riche (200, 205).

5. Procédé selon la revendication 1, **caractérisé en ce que** l'on détermine un écart (210) entre une courbe de signal réel de lambda de mélange de diagnostic (lam_Diag_Is) et une courbe calculée de signal de lambda de mélange de diagnostic (lam_Diag_Sim) au moyen de la différence de temps (ti_D), qui apparaît entre un passage par 1 de lambda (211) de la courbe de signal réel de lambda de mélange de diagnostic (lam_Diag_Is) et un passage par 1 de lambda (212) de la courbe calculée de lambda de mélange de diagnostic (lam_Diag_Sim), et **en ce que** l'on utilise la différence de temps (ti_D) pour la correction de la courbe de signal de consigne de lambda de mélange de diagnostic prédéterminée (lam_Diag_Sol) avec une valeur de correction de lambda de diagnostic (lam_Diag_Korr) et/ou pour interrompre le diagnostic.

6. Procédé selon la revendication 5, **caractérisé en ce que** l'on prévoit une formation de la valeur moyenne lors de la détermination du passage par 1 de lambda (211) de la courbe de signal réel de lambda de mélange de diagnostic (lam_Diag_Sim).

7. Procédé selon la revendication 5, **caractérisé en ce que** l'on détecte le passage par 1 de lambda (211) de la courbe de signal réel de lambda de mélange de diagnostic (lam_Diag_Is) à l'aide d'un signal de lambda en aval mesuré (lam_vK_Mes) avec une caractéristique de saut.

8. Dispositif pour effectuer un diagnostic sur un catalyseur (115) placé dans une zone d'échappement (113) d'un moteur à combustion interne (110), **caractérisé en ce qu'**il est prévu un appareil de commande (120) spécialement conçu pour la mise en oeuvre du procédé selon l'un quelconque des revendications précédentes.

9. Dispositif selon la revendication 8, **caractérisé en ce qu'**un détecteur de saut de lambda (114) est disposé en amont avant le catalyseur (115).

10. Programme d'appareil de commande, qui exécute toutes les étapes d'un procédé selon l'une quelconque des revendications 1 à 7, lorsqu'il est exécuté dans un appareil de commande (120).

11. Produit de programme d'appareil de commande avec un code de programme mémorisé sur un support lisible à la machine, pour la mise en oeuvre du procédé selon l'une quelconque des revendications 1 à 7, lorsque le programme est exécuté dans un appareil de commande (120).
